# EUROPEAN PATENT APPLICATION

(11) **EP 2 755 273 A2**
(43) Date of publication of application: **16.07.2014**
(21) Application number: 14150482.9
(22) Date of filing: 08.01.2014
(51) Int. Cl.: H01M 10/0569, H01M 10/0525, H01M 6/16

(54) **Mixtures of organic solvents, particularly for galvanic cells, and electrolytes for galvanic cells comprising said mixtures**

(30) Priority: 11.01.2013 PL 40242313
(71) Applicant: POLITECHNIKA WARSZAWSKA, 00-661 Warszawa (PL)
(72) Inventor: Kasprzyk-Niedzicka, Marta, 01-976 Warsaw (PL); Niedzicki, Leszek, 00-195 Warsaw (PL); Zalewska, Aldona, 05-092 omianki (PL); Wieczorek, W adys aw, 05-500 Piaseczno (PL); Marcinek, Marek, 02-797 Warsaw (PL)
(74) Representative: Padée, Grazyna

(57) **Abstract**

Mixtures of organic solvents for lithium-ion cells consisting of 1÷99% by wt. of at least one carbonate and 1÷99% by wt. of poly(ethylene glycol) and electrolytes based on the mixtures of organic solvents.

## Description

The invention relates to mixtures of organic solvents, particularly for galvanic cells and electrolytes for galvanic cells, operating fully at extremely low temperatures, while maintaining correct operation at room temperature.

Devices powered by chemical sources of electricity became widespread thanks to the improvement of lithium-ion cells and reduction of their production costs. Both the manufacturers of these cells and users of devices powered by them would like to obtain energy from these power sources even under extremely unfavourable conditions. The most frequent problem for electric cars and personal electronics (cellular phones, laptops) is temperatures below 0°C. This relates not only to polar or sub-polar areas, but also mountains as well as the winter seasons in cooler climates. Battery cells serve - apart from personal electronics-telecommunication in areas devoid of a power network, emergency communication and field medical devices that must operate in winter. Also, devices used in the aerospace industry, as they operate in space in near absolute zero temperatures (satellites, probes, orbital stations), as well as in high-altitude aviation or meteorological measurements (meteorological balloons pass through an area which may have a temperature as low as -75°C) must operate under reduced temperatures. Other devices requiring battery power may also be exposed to low temperatures.

Lithium-ion cells used up to now are very susceptible to low temperatures, causing their destruction, permanent damage or at a least temporary cease in the cell's operation. Commercially available lithium-ion cells do not operate below a temperature of -40°C, and their yield is significantly limited even below -20°C. The main cause of these temperature limitations is the electrolyte present in the cell. Currently, lithium-ion cells consist of two electrodes:
- anode, wherein the active component is a carbon material (e.g. graphite) or other material (e.g. lithium titanate - Li₄Ti₅O₁₂,), which may intercalate lithium ions;
- cathode, wherein the active component is one of the following materials: a transition metal oxide, such as CoO₂ or MnO₂, a mixture of transition metal oxides, such as NiₓCo_{y}Mn_{1-x-y}O₂, or a transition metal phosphate(V), e.g. FePO₄.
Between the electrodes is a polymer separator (made of polypropylene, polyethylene or a polypropylene-polyethylene mixture), soaked in liquid electrolyte. Considering the low number of commercially available lithium salts operating correctly as carriers of lithium ions in the electrolyte (lithium hexafluorophosphate(V), lithium chlorate(V), lithium bis(oxalate)borate, lithium tetrafluoroborate, lithium tris(pentafluoroethyl)trifluorophosphate(V), lithium bis(trifluoromethylsulfonyl)imide), there is a limited and known list of solvents that may be used for the production of electrolytes with the aforementioned salts. Mutual stability of the components is required as well as the stability of solvents at low and high potentials in the cell. The main solvent used is ethylene carbonate (EC). This is a solvent with a high relative dielectric constant. It enables electrolytic dissociation of the salt, but because of its high melting point (ca. 36°C), other solvents are added to it in order to reduce the melting temperature. Another solvent with a high relative dielectric constant, propylene carbonate (PC), has a significantly lower melting point, while with the following cycles of cell charging-discharging, it causes exfoliation of graphite, leading to disintegration of the anode and therefore damage to the cell. Perhaps it may be used in cells after the development of anode materials not based on graphite. Consequently, one or more of the following solvents are added to ethylene carbonate: dimethyl carbonate (DMC), diethyl carbonate (DEC), ethyl methyl carbonate (EMC) and fluoroethylene carbonate (FEC). These are not used separately because of their low relative dielectric constant, whereby the solubility of these salts is very small, and such solutions have low ionic conductivity. Another solvent class consists of a group of ethylene glycols with a general formula of HO(CH₂CH₂O)ₙH, HO(CH₂CH₂O)ₙCH₃ or CH₃O(CH₂CH₂O)ₙCH₃, denoted with the acronyms PEG, PEGME and PEGDME, respectively, and a number designating the average molecular mass or rounded average molecular mass (while for molecular masses below 222, poly(ethylene glycols) are most often monodisperse; generally the higher the number, the higher the polydispersity). The value of n for liquid polyglycols may be in the range from 1 to 500. However, in practice, liquid polyglycols useful for production of electrolytes are limited to about n=100 (PEG4400). The most common polyglycols in the battery industry are monodisperse poly(ethylene glycols): PEGDME90 (n=1, more often known under the names of glyme or DME), PEGDME134 (n=2, more often called diglyme), PEGDME178 (n=3, more often under the name of triglyme), PEGDME222 (n=4, also known as tetraglyme or TME); and polydisperse poly(ethylene glycols): PEGDME250, PEGME350, PEGDME500 and PEGDME1000.
Cells based on poly(ethylene glycols) are used less often because of their lower obtainable ionic conductivity, and therefore lower current densities are obtained from the cell. Their working temperatures may not be lower than approx. -15°C (melting temperature of electrolytes based on 250-500 polyglycols; this is higher for the longer ones, and the shorter ones are used less often because of their higher volatility and reactivity). Lithium-ion cells with electrolytes based on organic carbonates occur most often, and they are able to operate down to ca. -40°C, while a safe temperature recommended by the manufacturers is -20°C.
In the case of cells specially designed for low-temperature applications (below - 20°C), two ideas are used. In the first one, the influence of external conditions (ambient temperature) on the cell is avoided by application of air conditioned/environmental chambers/casings maintaining the appropriate high temperatures. However, such a solution causes loss of cell energy, which is consumed for maintaining the temperature - for heating of the chamber, as well as powering the electronic equipment and the sensors required for this operation. Moreover, construction of such a chamber leads to high costs in relation to the cell itself (or cell battery) as well as to a significant drop in the current density of the entire battery container (the battery together with the control electronics and environmental chamber - cooling/heating). Another solution is to use special solvent compositions (non-optimal for room or higher temperatures), which freezes within the range of -50 ÷ -60°C. The compositions of such a type were disclosed in the following publications: W.K. Behl, E.J. Plichta, An Electrolyte for Low-Temperature Applications of Lithium and Lithium-Ion Batteries, Army Research Laboratory report ARL-TR-1705, September 1998; M.S. Ding, T.R. Jow, Conductivity and Viscosity of PC-DEC and PC-EC Solutions of LiPF6, J. Electrochem. Soc. 150 (2003) A620-A628 (doi: 10.1149/1.1566019); M.C. Smart, B.V. Ratnakumar, L.D. Whitcanack, K.B. Chin, S. Surampudi, H. Croft, D. Tice, R. Staniewicz, Improved low-temperature performance of lithium-ion cells with quaternary carbonate-based electrolytes, J. Power Sources 119-121 (2003) 349-358 (doi: 10.1016/S0378-7753(03)00154-X); M.S. Ding, Improved low-temperature performance of lithium-ion cells with quaternary carbonate-based electrolytes, J. Electrochem. Soc. 151 (2004) A731-A738 (doi: 10.1149/1.1690782) and M.C. Smart, B.V. Ratnakumar, K.B. Chin, L.D. Whitcanack, Lithium-Ion Electrolytes Containing Ester Co-solvents for Improved Low Temperature Performance, J. Electrochem. Soc. 157 (2010) A1361-A1374 (doi: 10.1149/1.3501236). In this case, the reversibility of this process for the cell is a problem: after reheating, the electrodes are mechanically damaged (as a result of volume changes during phase transition from liquid to crystal and *vice versa*) or blocked by agglomerates of the locally crystallised lithium salt present in the electrolyte. Similarly, damage or destruction of the electrodes may be caused by their cracking; as a result of the freezing of the electrolyte in pores and inter-granular spaces, there is a risk of cell casing breakup or separator rupture caused by the volume changes of the electrolyte.

The goal of the invention is to obtain mixtures of organic solvents, particularly for galvanic cells and electrolytes for galvanic cells, operating fully at extremely low temperatures, while maintaining correct operation at room temperature.

The solvent mixtures, according to the invention, consist of 1÷99% by wt. of at least one carbonate with general formula 1 and/or with general formula 2, where R₁, R₂, R₃, and R₄ are the same or different and denote hydrogen, fluorine, C₁-C₅ alkyl, C₁-C₅ alkenyl or fluoroalkyl with one or more fluorine atoms, including perfluoroalkyl, where alkyl is C₁-C₅. and 1÷99% by wt. of poly(ethylene glycol) with general formula 3, where R₅ and R₆ are the same or different and denote hydrogen or C₁-C₅ alkyl, and n = 1÷100, including non-integral values.

Electrolytes for galvanic cells consist of 1÷99% by wt. of at least one carbonate with general formula 1 and/or with general formula 2, where R₁, R₂, R₃, and R₄ are the same or different and denote hydrogen, fluorine, C₁-C₅ alkyl, C₁-C₅ alkenyl or fluoroalkyl with one or more fluorine atoms, including perfluoroalkyl, where alkyl is C₁-C₅, 1÷99% by wt. of poly(ethylene glycol) with general formula 3, where R₅ and R₆ are the same or different and denote hydrogen or C₁-C₅ alkyl, and n = 1÷100, including non-integral values, and 0.01÷2 moles of sodium and/or lithium salt per 1 kg of the solvent mixture. As lithium and/or sodium salts, preferably a lithium or sodium salt of trifluoromethanesulfonyl (LiCF₃SO₃, NaCF₃SO₃), chlorate(VII) (LiClO₄ or NaClO₄), tetrafluoroborate (LiBF₄, NaBF₄), bis(trifluoromethylsulfonyl)imide (NaN(CF₃SO₂)₂, LiN(CF₃SO₂)₂), bis(pentafluoromethylsulfonyl)imide (NaN(CF₃CF₂SO₂)₂, LiN(CF₃CF₂SO₂)₂), hexafluorophosphate(V) (NaPF₆, LiPF₆), bis(oxalato)borate (NaB(C₂O₄)₂, LiB(C₂O₄)₂), difluoro(oxalate)borate (NaBF₂(C₂O₄), LiBF₂(C₂O₄)) tris(pentafluoroethyl)trifluorophosphate(V) (NaPF₃(C₂F₅)₃, LiPF₃(C₂F₅)₃), 4,5-dicyano-2-(trifluoromethyl)imidazole (NaTDI, LiTDI) or 4,5-dicyano-2-(pentafluoroethyl)imidazole (NaPDI, LiPDI) is used.

The invention solves the problem of low temperatures for galvanic cells, lowering the limit of the permissible application of a cell, as the electrolytes described in this application are liquid at very low temperatures (even below-100°C). Moreover, the mixtures and electrolytes constituting the subject of the application do not crystallise (they do not have a melting point) but only undergo a glass transition. Owing to this, even in the case of solidification, no crystalline domains form that may damage the cell, and the return to liquidity from the glass state is milder for the cell. There are no step change in conductivity, changes in density and density inhomogeneity, which take place during the melting of crystals. There are no alternative mixtures or electrolytes having only a glass transition temperature as well as no electrolytes with such a low temperature of liquidity.

By the mixing of common solvents used in galvanic cells in proper ratios and the addition of a salt with a proper concentration, the mixture may obtain a state in which the electrolyte cooling (or cooling of the mixture itself) does not cause any crystallisation but only a glass transition (the glass transition temperature is denoted by Tg). This phenomenon occurs for mixtures containing organic solvents according to the invention.

This phenomenon also occurs after the addition of salts to these mixtures, for instance lithium salts: lithium hexafluorophosphate(V) - LiPF₆ or lithium 4.5-dicyano-2-(trifluoromethyl)imidazolate - LiTDI in a broad range of concentrations of the salts. In some cases, the electrolytes are functional even below -90°C (e.g. Tg = -110°C for PC-containing mixtures and Tg = -95°C for EC-containing mixtures). It is noteworthy that the melting temperatures of pure solvents are as follows: EC: ca. 36°C, PC: -49°C, FEC: ca. 20°C, PEGDME222: above -30°C, PEGDME250: above -25°C, PEGME350: above -20°C, PEGDME500: above - 15°C.

Apart from the possibility to operate in extremely low temperatures (significantly lower than those for the battery mixtures known hitherto), the main advantage of these mixtures consists in the fact that at low temperatures, crystallisation does not occur (unheard-of earlier in the case of battery mixtures), but glass transition occurs, which is fully reversible and safe for the other cell components; also, no local salt agglomerates form (which may crystallise in the pores of the electrodes, destroying the latter), nor are there crystalline phases that might permanently damage the cell components or the entire cell (in the case of shorting of the electrodes or separator rupture, which may lead to the same consequence). Conductivity decreases gradually, without a sudden drop, as is the case for crystallisation of ordinary electrolytes.

Apart from their low-temperature properties, the mixtures are no more volatile than the electrolytes available hitherto operating at normal temperatures. In the case of mixtures containing FEC, EC and PC, the boiling temperature exceeds 200°C (each of the components has a boiling point significantly above 200°C); in the case of mixtures containing DMC, the boiling temperature is ca. 100°C. This means that extension of the operating range at low temperatures has not changed the functionality at high temperatures. The invention of this application does not introduce additional hazards for the cell (the majority of other cell components, e.g. some salts, have a decomposition temperature below 100°C).

The invention is not limited to lithium-ion cells, because similar problems (concerning operation at low temperatures) also occur in sodium-ion cells, lithium-air cells, etc. The invention may also be used in other applications requiring no crystallisation at low temperatures and a liquid state down to low temperatures, e.g. a coolant. The solvents applied are commonly used in the battery industry (and other industries), and they are cheap (mass-produced). For production of the mixtures or electrolytes being the subject of the invention, no special manufacturing methods or equipment other than those already used are needed. No changes in existing process lines for cell production, studies of stability, compatibility with other components or tests of the components as regards their toxicity, teratogenicity, carcinogenicity and other risks posed by them are needed, as they are all studied and have been used in the industry for many years.

### Example 1. Mixtures with the compositions and properties shown in Table 1 were obtained.

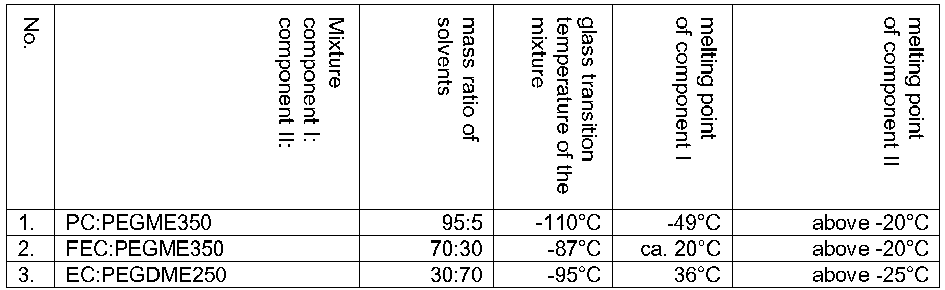

The properties of the obtained mixtures are illustrated in the Figures:

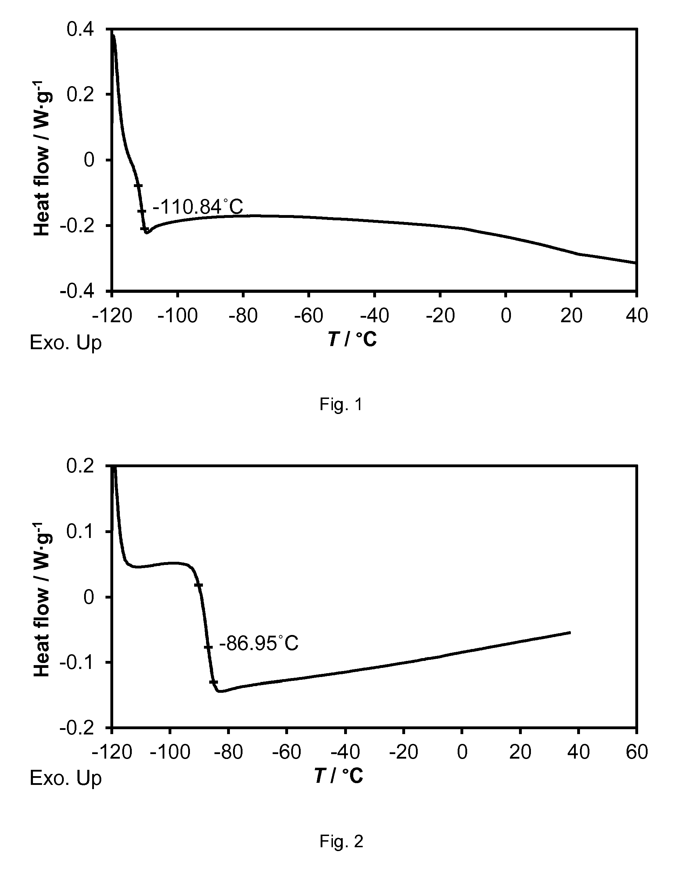

Fig. 1 - DSC (differential scanning calorimetry) plot for a PC:PEGME350 mixture (with a mass ratio of 95:5),
Fig.2 - DSC (differential scanning calorimetry) plot for a FEC:PEGME350 mixture (with a mass ratio of 70:30),
Fig. 3 - DSC (differential scanning calorimetry) plot for a EC:PEGDME250 mixture (with a mass ratio of 30:70)

### Example 2. Electrolytes with the compositions and properties shown in Table 2 were obtained.

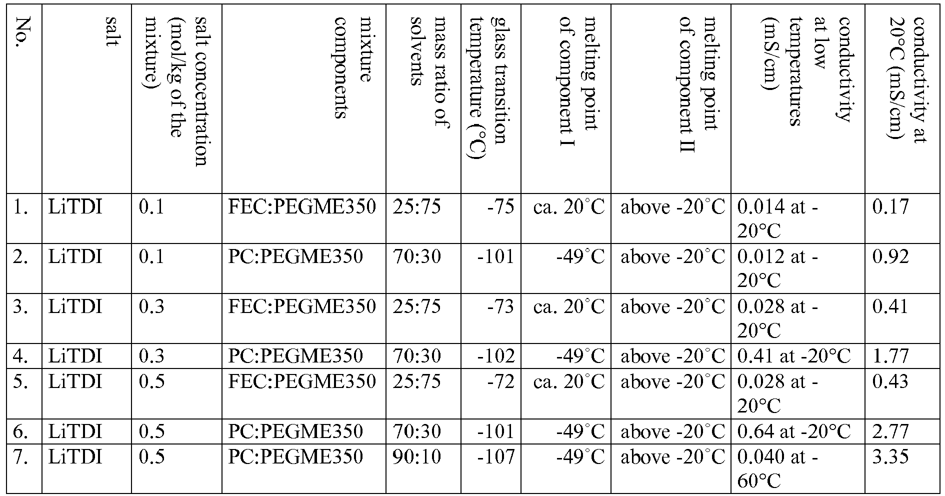

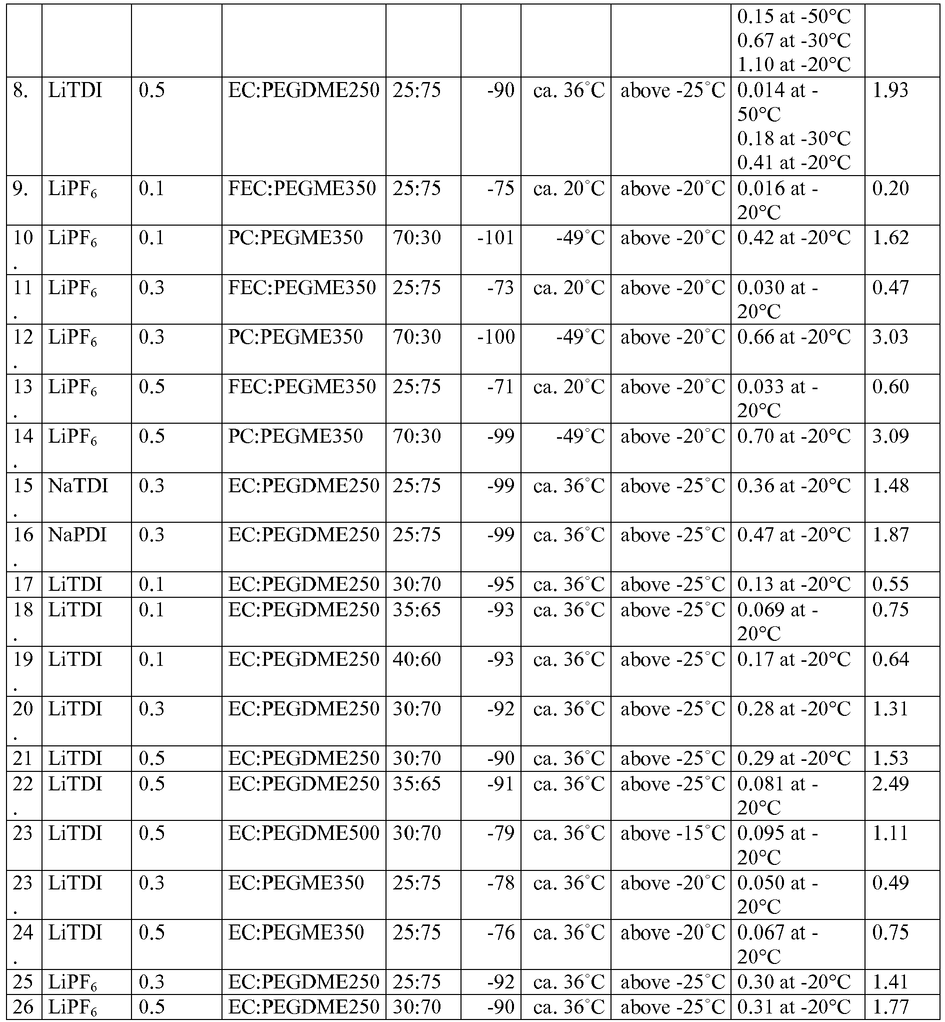

The properties of the selected obtained mixtures are shown in the following
Figures:

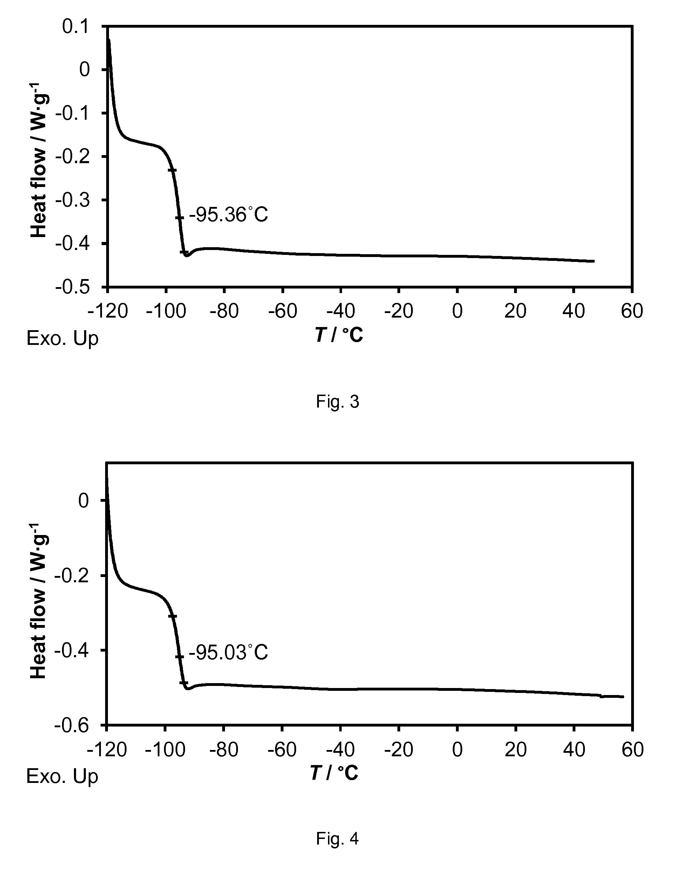

   Fig. 4 - DSC plot for a solution of 0.1 mol/kg LiTDI in EC:PEGDME250 (with a mass ratio of 30:70),

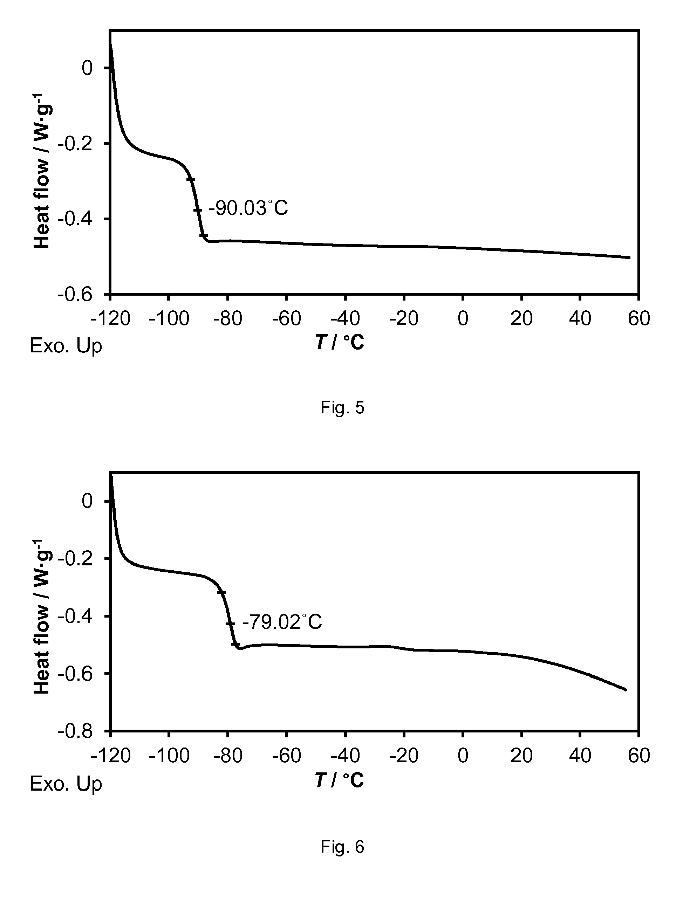

   Fig. 5 - DSC plot for a solution of 0.5 mol/kg LiTDI in EC:PEGDME250 (with a mass ratio of 30:70),
   Fig. 6 - DSC plot for a solution of 0.5 mol/kg LiTDI in EC:PEGDME500 (with a mass ratio of 30:70),

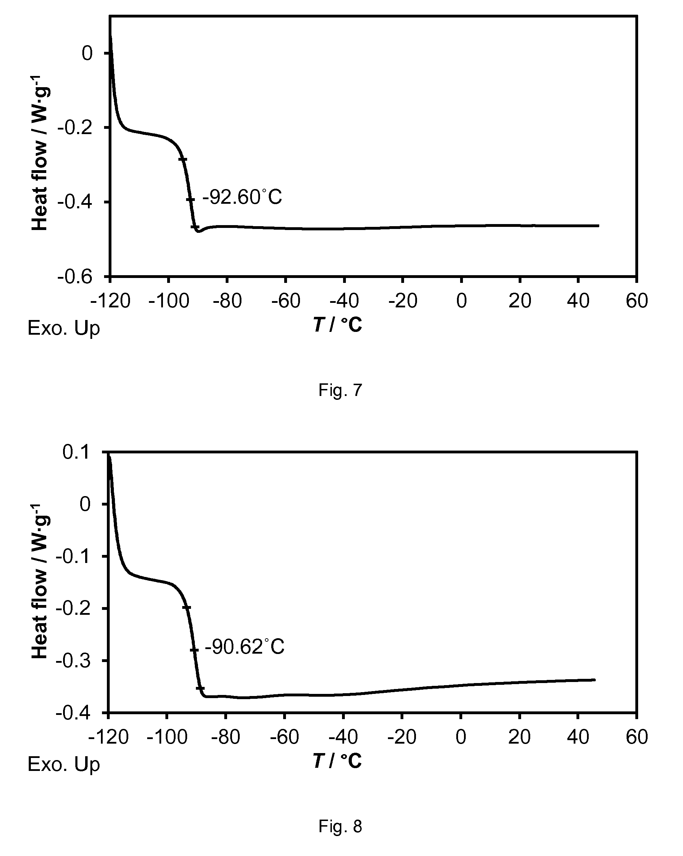

   Fig. 7 - DSC plot for a solution of 0.3 mol/kg LiPF₆ in EC:PEGDME250 (with a mass ratio of 25:70),
   Fig. 8 - DSC plot for a solution of 0.5 mol/kg LiPF₆ in EC:PEGDME250 (with a mass ratio of 30:70).

## Claims

1. Mixtures of organic solvents, particularly for galvanic cells, **characterised in that** they consist of 1÷99% by wt. of at least one carbonate with general formula 1 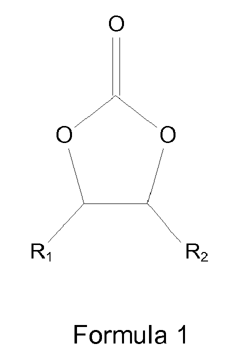 and/or with general formula 2 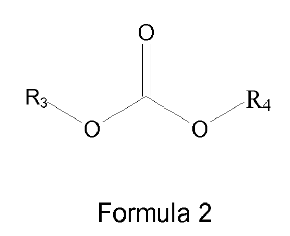 where R₁, R₂, R₃, and R₄ are the same or different and denote hydrogen, fluorine, C₁-C₅ alkyl, C₁-C₅ alkenyl or fluoroalkyl with one or more fluorine atoms, including perfluoroalkyl, where alkyl is C₁-C₅, and 1÷99% by wt. of poly(ethylene glycol) with general formula 3 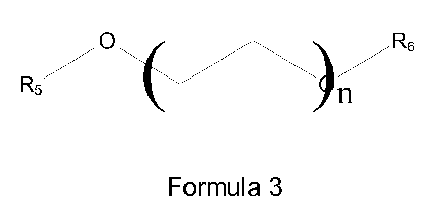 where R₅ and R₆ are the same or different and denote hydrogen or C₁-C₅ alkyl, and n = 1÷100, including non-integral values.

2. Electrolytes for galvanic cells based on mixtures of organic solvents and 0.01-2 mole or sodium and/or lithium salt per 1 kg of the solvent mixture, **characterised in that** they contains as a solvent 1÷99% by wt. of at least one carbonate with general formula 1 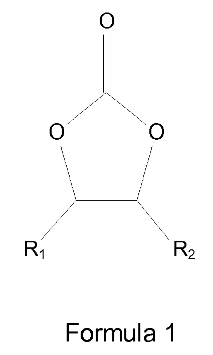 and/or with general formula 2 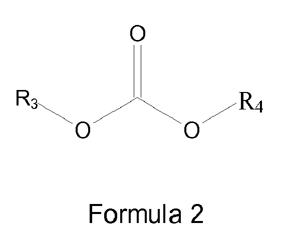 where R₁, R₂, R₃ and R₄ are the same or different and denote hydrogen, fluorine, C₁-C₅ alkyl, C₁-C₅ alkenyl or fluoroalkyl with one or more fluorine atoms, including perfluoroalkyl, where alkyl is C₁-C₅, and 1÷99% by wt. of poly(ethylene glycol) with general formula 3 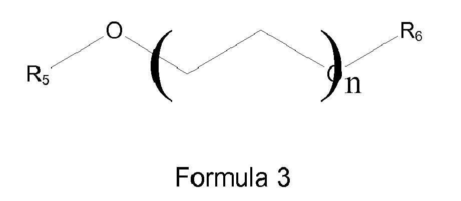 where R₅ and R₆ are the same or different and denote hydrogen or C₁-C₅ alkyl, and n = 1÷100, including non-integral values.

3. Electrolytes, according to claim 2, **characterised in that** as lithium and/or sodium salts, a lithium or sodium salt of trifluoromethanesulfonyl (LiCF₃SO₃, NaCF₃SO₃), chlorate(VII) (LiClO₄ or NaClO₄), tetrafluoroborate (LiBF₄, NaBF₄), bis(trifluoromethylsulfonyl)imide (NaN(CF₃SO₂)₂, LiN(CF₃SO₂)₂),
bis(pentafluoromethylsulfonyl)imide (NaN(CF₃CF₂SO₂)₂, LiN(CF₃CF₂SO₂)₂), hexafluorophosphate(V) (NaPF₆, LiPF₆), bis(oxalate)borate (NaB(C₂O₄)₂, LiB(C₂O₄)₂), difluoro(oxalate)borate (NaBF₂(C₂O₄), LiBF₂(C₂O₄)) tris(pentafluoroethyl)trifluorophosphate(V) (NaPF₃(C₂F₅)₃, LiPF₃(C₂F₅)₃), 4,5-dicyano-2-(trifluoromethyl)imidazole (NaTDI, LiTDI) or 4,5-dicyano-2-(pentafluoroethyl)imidazole (NaPDI, LiPDI) is used.
